# EUROPEAN PATENT APPLICATION

(11) **EP 1 498 795 A1**
(43) Date of publication of application: **19.01.2005**
(21) Application number: 03016257.2
(22) Date of filing: 17.07.2003
(51) Int. Cl.: G05D 16/20, F16K 31/00

(54) **Pressure regulating device**

(71) Applicant: Rossmax International LTD., Taipei (TW)
(72) Inventor: Yeh, Michael, Neihu Chiu, Taipei 114 (TW)
(74) Representative: Schaeberle, Steffen

(57) **Abstract**

A pressure-regulating device is provided for regulating the internal pressure of a gas container. The container has a vent hole through which the gas may vent. The pressure-regulating device includes an electrical control unit for outputting a voltage, and a deformable member is coupled to the electrical control unit. The voltage makes the deformable member to generate a corresponding deformation for causing the vent hole to open or close so as to regulate the interior pressure of the container.

## Description

### BACKGROUND OF THE INVENTION

### Field of the Invention

The invention relates to a pressure-regulating device, and more particularly to a pressure-regulating device for regulating the interior pressure of a container by utilizing a voltage to deflect a deformable member.

### Description of the Related Art

According to research, a person's blood pressure is the most frequent measurement taken in a hospital, which is also the most imprecise measurement. During the measurement of blood pressure, the film of an auscultator is placed on the brachial artery, and then the bladder of a manometer is closed and inflated. At this time, the mercury column of the manometer slowly rises and does not stop until it reaches approximately 180 mmHg. Thereafter, the bladder is slowly deflated at a rate of 2 mmHg per second. Meanwhile, the medical professional watches the readings on the manometer and listens for the onset of the Korotkoff sounds. The reading upon the onset of the first Korotkoff sound is the systolic pressure, and the reading upon the onset of the last Korotkoff sound is the diastolic pressure.

The conventional regulating device for regulating the air pressure in the bladder is composed of an electromagnetic coil and an adjustment member controlled by the electromagnetic coil. The adjustment member is actuated by the electromagnetic coil causing air in the bladder to be intermittently vented through a vent hole that is intermittently blocked by the adjustment. Hence, the actuation frequency and the actuation duration of the adjustment member may determine the bladder-venting (deflation) rate.

There are drawbacks in a conventional pressure-regulating device, because the adjustment member controlling the venting of the vent hole is dominated by the electromagnetic coil.

1. The device is power consuming and is large in volume because it is controlled electromagnetically.

2. There are also EMI (Electromagnetic Interference) problems caused by the electromagnetic coil. Therefore, it may interfere with other electrical devices or may not operate normally.

### SUMMARY OF THE INVENTION

In view of the above-mentioned problems, an object of the invention is to provide a smaller, power-saving pressure-regulating device, and also to prevent EMI problems from occurring in the pressure-regulating device.

The invention achieves the above-identified object by providing a pressure-regulating device to regulate the interior pressure of a gas container, which has a vent hole through which gas may be vented. The pressure-regulating device includes an electrical control unit for outputting a voltage, and a deformable member coupled to the electrical control unit. The voltage causes the deformable member to generate a corresponding deflection. It is possible to open and close the vent hole according to the deflection of the deformable member so that the interior pressure of the container may be regulated desirably and precisely.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1A is a schematic view showing a pressure-regulating device according to a first embodiment of the invention;

FIG. 1B is a schematic view showing that the deformable member shown in FIG. 1A deflects after it receives a voltage;

FIG. 1 C is a schematic view showing a laminated piezoelectric sheet serving as a deformable member in the first embodiment of the invention;

FIG. 1D is a schematic view showing that the laminated piezoelectric sheet shown in FIG. 1 C deflects after it receives a voltage;

FIG. 1E is a schematic view showing the pressure-regulating device having a container formed with multiple vent holes according to the first embodiment of the invention;

FIG. 1 F is a schematic view showing that the deformable member shown in FIG. 1 E deflects after it receives a voltage;

FIG. 2A is a schematic view showing a vent hole of the container and the pressure-regulating device according to a second embodiment of the invention;

FIG. 2B is a cross-sectional view taken along a line 2B-2B of FIG. 2A;

FIG. 3A is a schematic view showing a vent hole of the container and the pressure-regulating device according to a third embodiment of the invention;

FIG. 3B is a schematic view showing that the deformable member shown in FIG. 3A deflects after receiving a voltage;

FIG. 4A is a schematic view showing a pressure-regulating device according to a fourth embodiment of the invention; and

FIG. 4B is a schematic view showing that the deformable member shown in FIG. 4A receives a voltage and deflects to open and close the vent hole.

### DETAILED DESCRIPTION OF THE INVENTION

The pressure-regulating device of the invention mainly includes an electrical control unit and a deformable member. The electrical control unit outputs a voltage that causes the deformable member to generate a deflection. The deflection may control the open and closed states of the vent hole of the gas container, thus, regulating the interior pressure of the container. The invention is applicable to devices for venting gas or draining liquid. For example, the invention is applicable to but not limited to a manometer.

### First Embodiment:

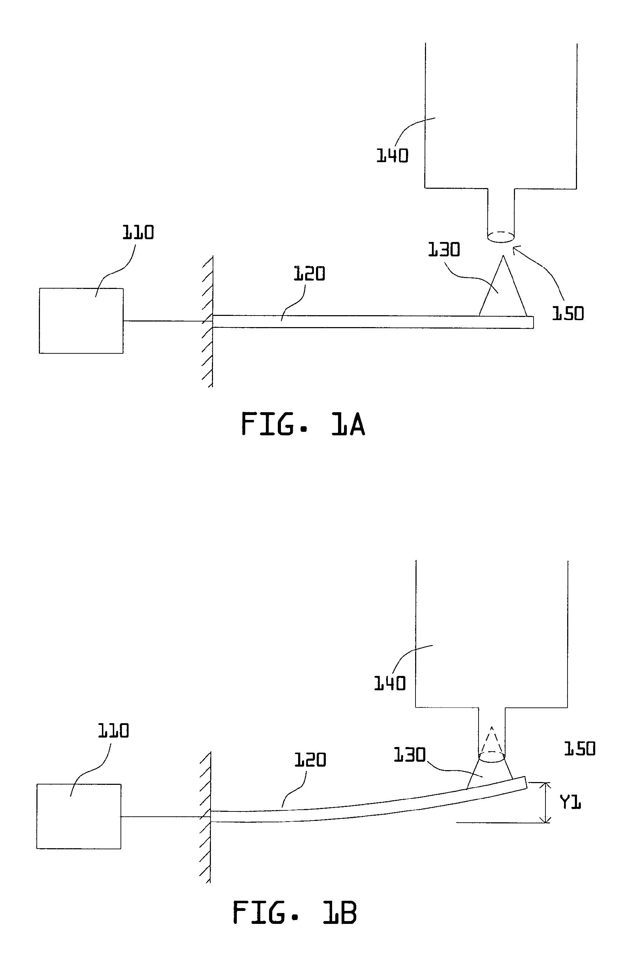

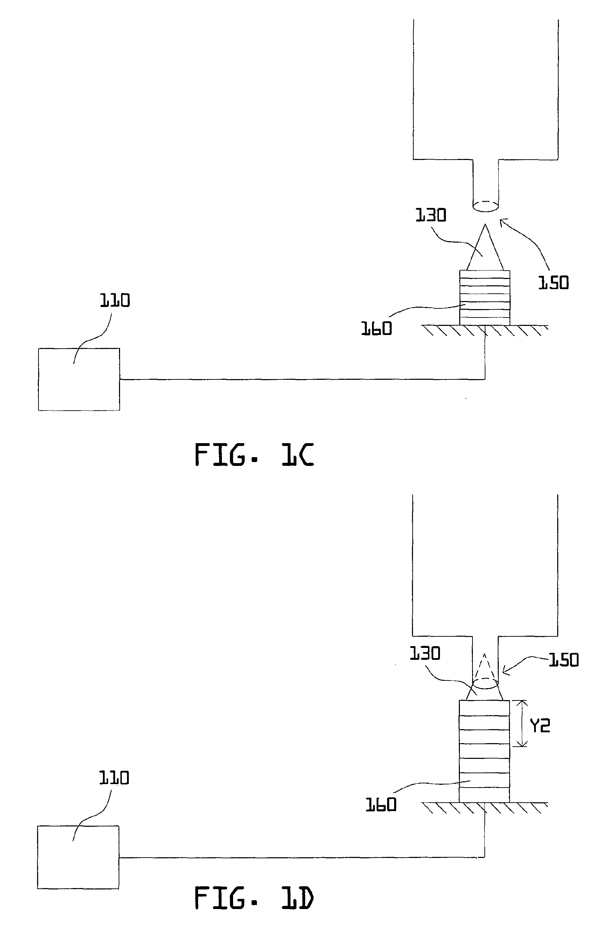

Please refer to FIG. 1A, which is a schematic view showing a pressure-regulating device according to a first embodiment of the invention. The pressure-regulating device includes an electrical control unit 110, a deformable member 120 and an adjustment member 130. The pressure-regulating device regulates the interior gas pressure in a container 140 containing the gas. The container 140 may have a vent hole 150 through which the gas in the container may be vented.

Please refer simultaneously to FIG. 1A and FIG. 1B, which are schematic views showing that the deformable member of FIG. 1 A deflects after it receives a voltage. The electrical control unit 110 is coupled to the deformable member 120. The adjustment member 130 is disposed on the deformable member 120 and is opposite to the vent hole 150 of the container 140. The electrical control unit 110 outputs a voltage to the deformable member 120, and the voltage may cause the deformable member 120 to generate a corresponding deflection Y1. The deflection Y1 may cause the adjustment member 130 disposed on the deformable member 120 to generate a corresponding displacement. The vent hole 150 can be closed or opened according to the displacement of the adjustment member 130. In FIG. 1A, the vent hole 150 is shown open, while the vent hole 150 is closed in FIG. 1 B. Accordingly, the pressure within the container 140 can be regulated.

The above-mentioned deformable member 120 may be a piezoelectric sheet; a laminated piezoelectric sheet, which will be described in FIGS. 1 C and 1 D; a bi-metal sheet; a memorizing alloy sheet; or some other type of sheet of material that may deflect under a voltage from the electrical control unit.

FIG. 1 C is a schematic view showing a laminated piezoelectric sheet serving as a deformable member in the first embodiment of the invention, and FIG. 1 D is a schematic view showing that the laminated piezoelectric sheet in FIG. 1 C deflects after it receives a voltage. The deformable member may be a laminated piezoelectric sheet 160 that is controlled by the voltage from the electrical control unit 110. The laminated piezoelectric sheet 160 is controlled by the voltage to generate a corresponding deflection Y2, which may cause the adjustment member 130 to generate a corresponding displacement that opens or closes the vent hole 150.

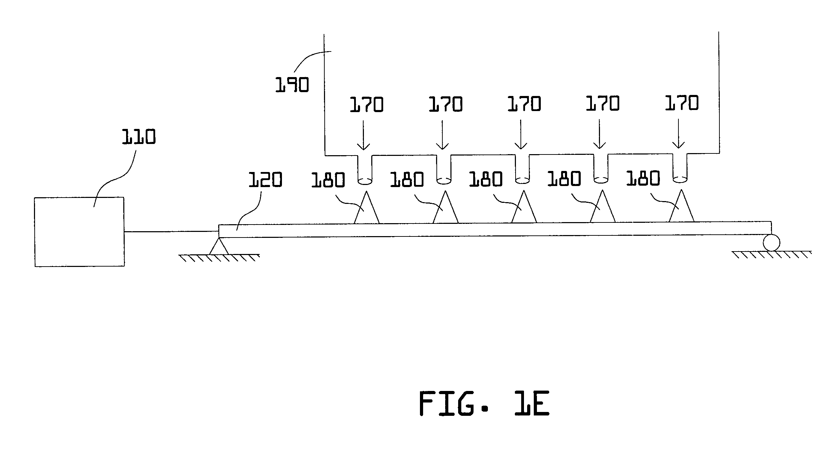

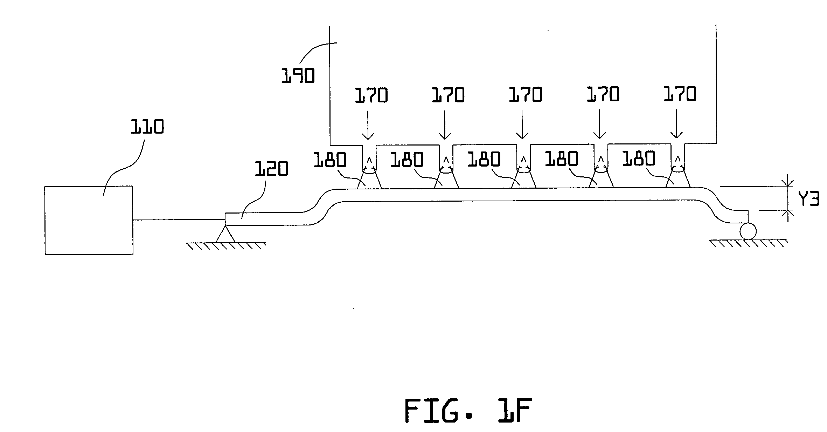

Alternatively, the container may be formed with multiple vent holes. Please refer to FIGS. 1 E and 1 F. FIG. 1 E is a schematic view showing a pressure-regulating device that has a container formed with multiple vent holes, according to the first embodiment of the invention. FIG. 1 F is a schematic view showing that the deformable member of FIG. 1 E deflects after it receives a voltage. Multiple adjustment members 180 may be disposed on the deformable member 120 in correspondence with the vent holes 170. The deformable member 120 is controlled by the voltage from the electrical control unit to generate a deflection Y3, and therefore, the adjustment members 180 have a corresponding displacement to open and close the vent holes 170 for adjusting the interior pressure of the container 190.

### Second Embodiment:

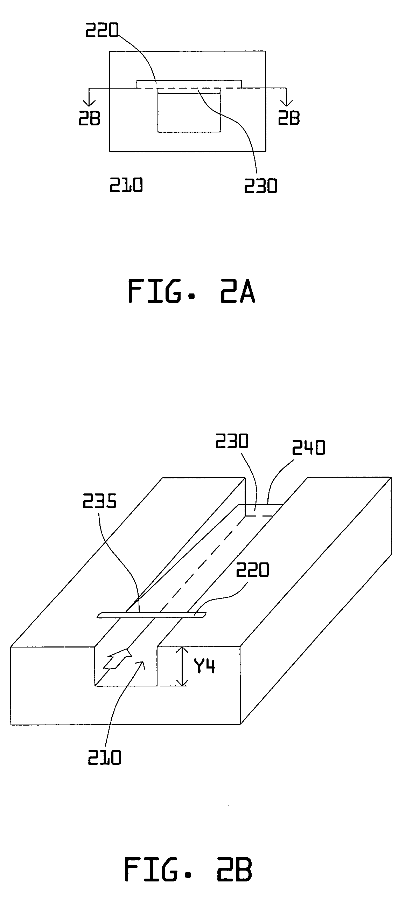

Please refer to FIGS. 2A and 2B. FIG. 2A is a schematic view showing a vent hole of the container and the pressure-regulating device according to a second embodiment of the invention. FIG. 2B is a cross-sectional view taken along a line 2B-2B of FIG. 2A. The pressure-regulating device may be placed in a vent hole 210, as shown in the drawings, to regulate the gas pressure in the container. The gas is vented in the direction as indicated by the arrow in FIG. 2B. The pressure-regulating device includes an electrical control unit 220 and a deformable member 230. The second embodiment differs from the first embodiment in that the deformable member 230 is directly located in the vent hole 210. A voltage from the electrical control unit 220 is applied to the deformable member 230for causing a corresponding deflection Y4 of the member 230. The deflection Y4 may close the vent hole, and the gas pressure in the container may be regulated accordingly.

That is, the deformable member 230 has two edges 235 and 240. The edge 235 of the deformable member 230 is mounted to the electrical control unit 220. When the deformable member 230 receives the voltage from the electrical control unit 220, the edge 240 of the deformable member 230 may generate the deflection Y4 and contact the bottom of the vent hole 210 of FIG. 2B. At this time, the vent hole 210 is closed and the gas cannot be vented out of the container. When the electrical control unit 220 stops applying the voltage to the deformable member 230, the deformable member 230 may recover back to original state. Alternatively, the electrical control unit 220 may output another voltage to cause the deformable member 230 to recover back to original state. That is, the edge 240 returns to the top of the vent hole 210. At this time the vent hole 210 is opened, and the gas in the container may be vented. By using the electrical control unit 220 to control the deformation and deflection of the deformable member 230 and thus to open and close the vent hole 210, the gas pressure in the gas container may be effectively regulated.

The above-mentioned deformable member 230 may be a piezoelectric sheet, a bi-metallic sheet, a memorizing alloy sheet, or another type of material sheet that may deflect by a voltage from the electrical control unit.

### Third Embodiment:

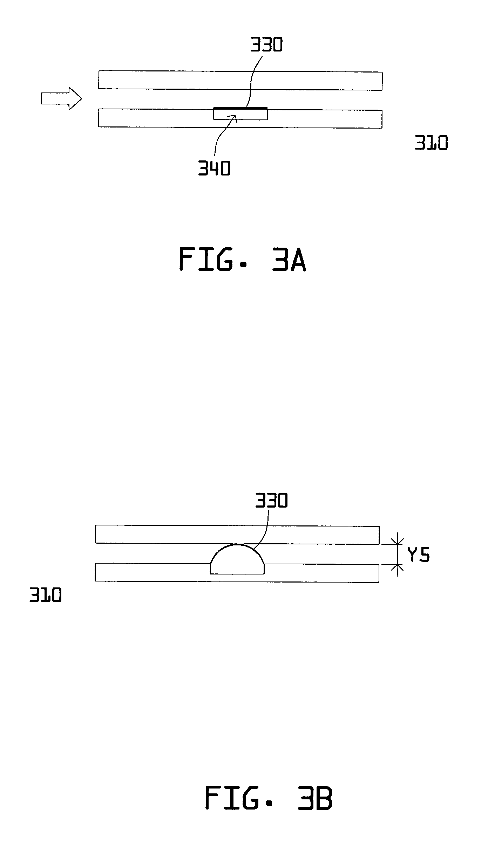

FIG. 3A is a schematic view showing a vent hole of the container and the pressure-regulating device according to a third embodiment of the invention. FIG. 3B is a schematic view showing the deflection of the deformable member of FIG. 3A after receiving a voltage. The third embodiment differs from the first and second embodiments in that the pressure-regulating device of the third embodiment may be located in the vent hole 310, through which the gas contained in the container may be vented in one direction as indicated by the arrow in FIG. 3A, regulating the gas pressure in the container. The pressure-regulating device also includes an electrical control unit (not shown in FIGS. 3A and 3B) and a deformable member 330.

The vent hole 310 is formed with a recess. The deformable member 330 is located in the vent hole 310 and covers the recess to form an air chamber 340 between the recess and the deformable member 330. The deformable member 330 is coupled to the electrical control unit and generates a corresponding deflection Y5 according to the voltage from the electrical control unit. The deflection Y5 may change the state of the vent hole 310 from open state(FIG. 3A) to closed state (FIG. 3B)so that the gas in the container cannot be vented. To control the deflection Y5 of the deformable member 330 via the electrical control unit, the vent hole 310 may be opened and closed so that the gas pressure in the container may be regulated.

The air chamber 340 functions to make the alteration of the deformable member 330 more convenient. That is, when the electrical control unit coupled to the deformable member 330 outputs a voltage, it is not difficult to alter the deformable member 330 owing to the vacuum state under the deformable member 330.

The above-mentioned deformable member 330 may be a piezoelectric film, a bi-metallic film, a memorizing alloy film, or another type of film material that may deflect under a voltage from the electrical control unit.

### Fourth Embodiment:

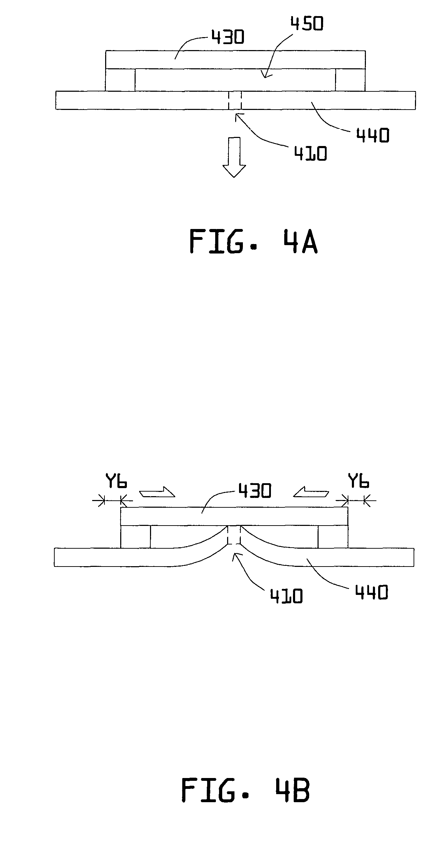

FIG. 4A is a schematic view showing a pressure-regulating device according to a fourth embodiment of the invention. FIG. 4B is a schematic view showing that the deformable member of FIG. 4A deflects when it receives a voltage to open or close the vent hole. The fourth embodiment differs from the first, second, and third embodiments in that the vent hole 410, through which the gas in the container may be vented, is formed in an elastic member 440 coupled to the deformable member 430 to regulate the gas pressure in the container. The pressure-regulating device includes an electrical control unit (not shown in FIGs. 4A and 4B), a deformable member 430, and an elastic member 440.

The surface of the elastic member 440 is formed with the vent hole 410. The electrical control unit outputs the voltage. The deformable member 430 is coupled to the elastic member 440, and a chamber 450 for holding the gas is formed between the deformable member 430 and the elastic member 440. The gas may be vented out of the chamber 450 through the vent hole 410 in the direction as indicated by the arrow in FIG. 4A.

The electrical control unit, coupled to the deformable member 430, outputs a voltage for causing the deformable member 430 to generate a corresponding deflection Y6, as shown in FIG. 4B. The deflection Y6 may cause the elastic member 440 to make the vent hole 410 close to or away from the deformable member 430 so that the gas may or may not be vented out of the chamber 450. Hence, the interior pressure in the chamber 450 may be regulated.

The above-mentioned elastic member 440 may be a metal sheet or other type of material sheet that is easily deformed under an external force. The deformable member 430 may be a piezoelectric sheet, a bi-metallic sheet, a memorizing alloy sheet, or other type of material sheet that may deflect under the voltage of the electrical control unit.

In summary, the feature of the pressure-regulating device of the invention resides in that the deformable member can generate a deflection under the control of the electrical control unit. The deflection may enable the opening and closing of a vent hole so that the gas pressure in the container may be regulated. In addition, since the deformation of the deformable member of the invention is electrically controlled, it is possible to resolve the problems occurring in conventional pressure-regulating devices.

The geometric structure shown for each member in the embodiments of the invention is for illustration purposes only and does not limit the applicable conditions of the invention. One of ordinary skill in the art may easily modify the above-mentioned embodiments to achieve similar functions to those of the invention without departing from the spirit of the invention.

The pressure-regulating devices according to the embodiments of the invention have at least the following advantages.

1. The pressure-regulating devices are power-saving and small-sized because the deformation of each of the deformable members is electrically and precisely controlled.

2. The pressure-regulating devices are free from the negative influence of EMI in conventional pressure-regulating devices.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A pressure-regulating device for regulating interior pressure in a container in which gas is contained, the container having a vent hole through which the gas is vented, the pressure-regulating device comprising:
an electrical control unit for outputting a voltage;
a deformable member coupled to the electrical control unit, wherein the voltage causes the deformable member to generate a corresponding deformation; and
an adjustment member disposed on the deformable member and opposite to the vent hole, wherein the deformation causes the adjustment member to generate a corresponding displacement, and causes the vent hole to open or close according to the displacement of the adjustment member so that the interior pressure of the container may be regulated.

2. The pressure-regulating device according to claim 1, wherein the deformable member is a piezoelectric sheet.

3. The pressure-regulating device according to claim 1, wherein the deformable member is a laminated piezoelectric sheet.

4. The pressure-regulating device according to claim 1, wherein the

5. The pressure-regulating device according to claim 1, wherein the deformable member is a memorizing alloy sheet.

6. A pressure-regulating device for regulating interior pressure of a container in which gas is contained, the container having a vent hole through which the gas is vented, the pressure-regulating device comprising:
an electrical control unit for outputting a voltage; and
a deformable member coupled to the electrical control unit and located in the vent hole, wherein the voltage causes the deformable member to generate a corresponding deformationfor causing the vent hole to open and close so as to regulate the interior pressure of the container.

7. The pressure-regulating device according to claim 6, wherein the deformable member is a piezoelectric sheet.

8. The pressure-regulating device according to claim 6, wherein the deformable member is a bi-metallic sheet.

9. The pressure-regulating device according to claim 6, wherein the deformable member is a memorizing alloy sheet.

10. A pressure-regulating device for regulating interior pressure of a container in which gas is contained, the container having a vent hole through which the gas is vented, the vent hole is formed with a recess, the pressure-regulating device comprising:
an electrical control unit for outputting a voltage; and
a deformable member coupled to the electrical control unit, located in the vent hole and covering the recess, wherein the voltage causes the deformable member to generate a corresponding deformation for causing the vent hole to open or close so as to regulate the interior pressure of the container.

11. The pressure-regulating device according to claim 10, wherein the deformable member is a piezoelectric film.

12. The pressure-regulating device according to claim 10, wherein the deformable member is a bi-metallic film.

13. The pressure-regulating device according to claim 10, wherein the deformable member is a memorizing alloy film.

14. The pressure-regulating device according to claim 10, wherein an air chamber is formed between the recess and the deformable member.

15. A pressure-regulating device, comprising:
an elastic member having a surface with a vent hole;
an electrical control unit for outputting a voltage; and
a deformable member coupled to the electrical control unit and the elastic member, a chamber for containing gas being formed between the deformable member and the elastic member, wherein the gas may be vented out of the chamber through the vent hole, wherein the voltage causes the deformable member to generate a corresponding deformation for causing the elastic member to move the vent hole close to or away from the deformable member so as to regulate the interior pressure of the chamber.

16. The pressure-regulating device according to claim 15, wherein the elastic member is a metal sheet.

17. The pressure-regulating device according to claim 15, wherein the deformable member is a piezoelectric sheet.

18. The pressure-regulating device according to claim 15, wherein the deformable member is a bi-metallic sheet.

19. The pressure-regulating device according to claim 15, wherein the deformable member is a memorizing alloy sheet.
